# DEMANDE DE BREVET EUROPEEN

(11) **EP 2 713 625 A1**
(43) Date de publication de la demande: **02.04.2014**
(21) Numéro de dépôt: 13186203.9
(22) Date de dépôt: 26.09.2013
(51) Int. Cl.: H04N 21/81, H04N 21/443, G06F 9/455

(54) **Procédé et système de fourniture d'un contenu multimédia, machine virtuelle, serveurs, terminal de communication et programme d'ordinateur correspondants**

(30) Priorité: 28.09.2012 FR 1259153
(71) Demandeur: Orange, 75015 Paris (FR)
(72) Inventeur: Orveillon, Laurent, 22730 Tregastel (FR); Vandenbussche, Armand, 22300 Lannion (FR)
(74) Mandataire: Le Noane, Karine

(57) **Abrégé**

L'invention concerne un procédé de fourniture d'au moins un contenu multimédia à au moins un terminal de communication d'un utilisateur, dit terminal utilisateur, sur lequel s'affiche un écran virtuel fourni par un serveur distant hébergeant une machine virtuelle.

Selon l'invention, un tel procédé comprend les étapes suivantes :
• génération d'un écran virtuel modifié présentant une zone non calculée, dite zone sans affichage, correspondant à une zone de visionnage dudit contenu multimédia sur ledit terminal utilisateur ;
• multiplexage dudit écran virtuel modifié et dudit contenu multimédia délivrant un écran virtuel optimisé affichant ledit contenu multimédia dans ladite zone de visionnage ;
• fourniture dudit écran virtuel optimisé audit terminal utilisateur.

## Description

### 1. Domaine de l'invention

La présente invention se rapporte au domaine de l'informatique et des réseaux de télécommunication.

Plus particulièrement, l'invention concerne un mécanisme de visionnage d'un contenu multimédia joué dans une machine virtuelle distante disposant d'un déport d'affichage vers un utilisateur distant.

L'invention trouve également des applications dans les systèmes de distribution de contenus permettant d'optimiser la distribution des contenus multimédia entre des machines virtuelles et des utilisateurs.

### 2. Art antérieur

### 2.1 La virtualisation d'applications

Dans le domaine des télécommunications, la virtualisation est un ensemble de solutions matérielles et logicielles visant à abstraire des ressources physiques du type processeur, unité de stockage ou ressources réseau, pour les rendre virtuelles.

La virtualisation est une technique permettant de faire fonctionner un système d'exploitation et des applications (par exemple des logiciels) dans une machine virtuelle.

Selon cette technique, le système d'exploitation et les applications n'ont pas accès directement aux périphériques matériels de la machine physique qui les met en oeuvre. En effet, les applications virtualisées ont accès aux périphériques matériels via un « hyperviseur », programme ayant pour fonction de présenter tous les périphériques à la machine virtuelle en les émulant. Un hyperviseur est donc une plate-forme de virtualisation qui permet à plusieurs systèmes d'exploitation de travailler en même temps sur une machine physique.

Dans l'art antérieur, il existe des techniques pour exécuter des applications informatiques et/ou créer des machines virtuelles dans des machines d'un réseau informatique. Ces techniques sont appelées "*Cloud Computing*" en anglais.

### 2.2 Utilisation des cartes graphiques virtuelles

Les mécanismes de virtualisation embarquent des périphériques virtuels tels que la carte graphique qui ont pour rôle d'émuler le fonctionnement d'un matériel pour le système d'exploitation des machines virtuelles.

Cette émulation est réalisée par un programme informatique inclus dans l'hyperviseur et a en charge de construire l'image graphique normalement réalisée par la carte graphique physique. Cette image est ensuite envoyée soit à la carte graphique de l'ordinateur hébergeant l'hyperviseur (cas d'un usage en local sur une machine indépendante) soit vers le programme de déport d'affichage dans le cas d'un usage à distance.

Un centre de calcul d'un opérateur réseau, avec un ensemble de machines virtuelles pour plusieurs utilisateurs, ne permet pas, avec les systèmes actuels, de visionner correctement une vidéo.

En effet, le rendu graphique sur une machine virtuelle d'un contenu vidéo nécessite une surcharge de processeur de la part de l'hyperviseur car il n'existe pas d'accélération matérielle, comme c'est le cas sur une machine réelle avec la carte graphique.

### 2.3 Le déport de terminal des machines virtuelles

Le déport de terminal est une technique qui permet à un utilisateur de contrôler et visualiser un ordinateur distant. L'écran est encodé à l'aide d'un algorithme de compression vidéo et il existe un protocole d'échange pour les périphériques tels que la souris ou le clavier.

Dans l'art antérieur, il existe des techniques pour déporter l'écran et le contrôle du bureau du système d'exploitation ou de la machine tout entière. Ces techniques sont appelées "*Remote Desktop*" en anglais.

Le déport de l'affichage est transporté sur un réseau d'opérateur qui relie des centres de calcul à des utilisateurs, ces centres de calcul hébergeant les machines virtuelles des utilisateurs.

Comme indiqué précédemment, un centre de calcul d'un opérateur réseau, avec un ensemble de machines virtuelles pour plusieurs utilisateurs, ne permet pas, avec les systèmes actuels, de visionner correctement une vidéo.

De plus, le nombre d'images par seconde pour une vidéo est largement supérieur à celui d'un bureau applicatif par exemple, ce qui génère des problèmes avec les protocoles classiques de déport d'écran qui, du fait même de leur conception, ne sont pas adaptés à cet usage.

En effet, les mécanismes classiques d'encodage vidéo reposent essentiellement sur la différence entre deux images fixes pour ne transmettre que ce qui a changé, pour limiter le flux de données à transmettre. De ce fait, un déport d'écran relativement statique va engendrer un flux de petite taille et va permettre de suivre une cadence pour un rendu le plus proche possible du temps réel coté utilisateur, ce qui est primordial notamment pour les mouvements de souris ou actions de l'utilisateur, qui doivent entrainer une réponse instantanée, sous peine de rendre l'usage rédhibitoire.

Il faut donc disposer d'un système capable d'encoder l'écran de la machine virtuelle à une cadence suffisante pour avoir un rendu de type temps réel et ce pour des images qui changent rapidement, comme par exemple dans le cas du visionnage d'un contenu vidéo.

Cela impose donc une charge de calcul conséquente pour le centre de calcul et un flux réseau de distribution plus grand, et pose un problème, selon les techniques actuelles, dès lors qu'un utilisateur souhaite visionner un contenu. Ce problème est amplifié lorsqu'un grand nombre d'utilisateurs souhaitent visionner des contenus dans un même centre de calcul car cela engendre une surcharge d'exécution.

Il existe donc un besoin pour un procédé permettant d'alléger la charge de calcul dans un centre de calcul, lors du visionnage de contenus multimédia, par exemple une vidéo, au sein de machines virtuelles.

### 2.4 La distribution de contenus

La distribution de contenus est une technique permettant de diminuer la charge d'un système central de diffusion de contenus en répartissant les contenus sur des serveurs plus proches des demandeurs. Cette technique s'applique en particulier pour des contenus populaires et partagés.

Dans l'art antérieur, il existe des techniques pour distribuer des fichiers ou flux vidéo au travers d'un réseau de communication. Ces techniques sont appelées "*Content Delivery Network*" en anglais ou « Réseau de Livraison de Contenu » ou « Réseau de Distribution de Contenu ».

L'application de ces techniques a permis de proposer d'optimiser la distribution de contenus populaires au travers des réseaux de communication en rapprochant le contenu de l'usager, évitant ainsi la surcharge du serveur d'origine et améliorant la qualité du service rendu à l'utilisateur.

Le système utilise un algorithme de redirection de la requête de l'utilisateur vers un serveur de contenus de réplication, élu par des critères de sélection qui peuvent être basés sur la géolocalisation ou la charge du réseau de communication.

Le principe du système repose sur la mutualisation d'un contenu entre plusieurs usagers pour être efficace : il s'agit de distribuer principalement les contenus qui seront souvent accédés et donc populaires.

Le système de distribution de contenus comme évoqué précédemment distribue des fichiers notamment en fonction de la géolocalisation de l'utilisateur.

Dans le cas d'une machine virtuelle hébergée dans un centre de calcul et qui télécharge une vidéo, le noeud de cache à proximité de l'utilisateur, qui pourrait disposer de la vidéo, n'est jamais utilisé car l'origine de la requête est le centre de calcul hébergeant la machine virtuelle, et non pas l'utilisateur. En effet, le système de distribution de fichiers localise la requête comme provenant du centre de calcul. De ce fait, on ne décharge pas le réseau de l'opérateur pour la distribution de cette vidéo car on n'utilise pas la mise en cache à proximité de l'utilisateur.

Il existe donc un besoin pour améliorer le fonctionnement de la distribution de fichiers dans le cas de l'utilisation de machines virtuelles, afin de diminuer la charge du réseau opérateur et d'utiliser le système de distribution de contenus mis en place par cet opérateur.

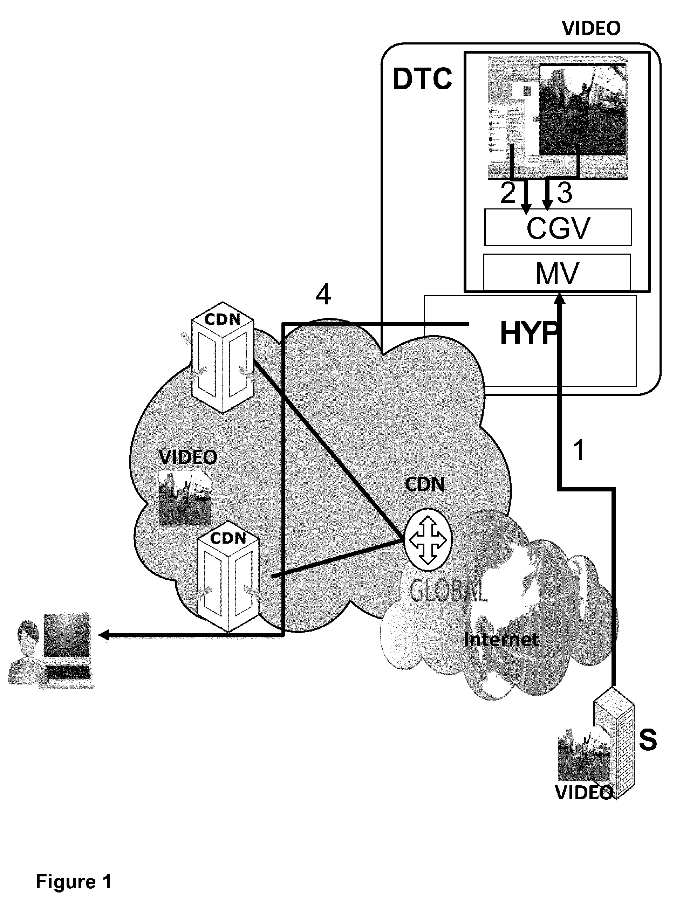

La figure 1 illustre un système de l'art antérieur, présentant un centre de calcul DTC au sein duquel s'exécute un hyperviseur HYP hébergeant une machine virtuelle MV proposée à un utilisateur. Cet utilisateur visionne un contenu vidéo depuis Internet, acquis par la machine virtuelle via son accès réseau (flux 1). Le système d'exploitation de la machine virtuelle MV exécute une application de lecture de contenus vidéo sur son bureau. Le rendu graphique généré par la carte graphique virtuelle va donc être la somme du bureau (flux 2) et celui de l'application de rendu vidéo (flux 3). Ensuite ce rendu graphique va être encodé par le protocole de déport d'affichage pour aller vers l'utilisateur au travers du réseau d'opérateur (flux 4).

On constate d'une part que le fichier vidéo disponible au plus près de l'utilisateur n'est pas utilisé, l'origine de la requête de visionnage du flux émanant de la machine virtuelle, et que le flux 4 peut être de qualité moindre pour l'utilisateur, en raison de la charge de calcul nécessaire au rendu de la vidéo via la machine virtuelle.

### 3. Exposé de l'invention

L'invention propose une solution nouvelle qui ne présente pas l'ensemble de ces inconvénients de l'art antérieur, sous la forme d'un procédé de fourniture d'au moins un contenu multimédia à au moins un terminal de communication d'un utilisateur, dit terminal utilisateur, sur lequel s'affiche un écran virtuel (EV) fourni par un serveur distant hébergeant une machine virtuelle.

Selon un mode de réalisation de l'invention, un tel procédé comprend les étapes suivantes :
- génération d'un écran virtuel modifié (EV*mod*) présentant une zone non calculée, dite zone sans affichage, correspondant à une zone de visionnage du contenu multimédia sur le terminal utilisateur ;
- multiplexage de l'écran virtuel modifié (EV*mod*) et du contenu multimédia délivrant un écran virtuel optimisé (EV*opt*) affichant le contenu multimédia dans la zone de visionnage ;
- fourniture de l'écran virtuel optimisé (EV*opt*) au terminal utilisateur.

Ainsi, l'invention permet d'optimiser la fourniture d'un, ou plusieurs, contenu(s) multimédia (par exemple une vidéo) requis par un utilisateur, via un écran virtuel déporté en tronquant cet écran virtuel de façon à ne pas y inclure le/les contenu(s) multimédia, puis en multiplexant l'écran virtuel tronqué et le/les contenu(s) multimédia de façon à fournir à l'utilisateur un écran virtuel optimisé lui permettant de visionner un contenu multimédia de manière performante.

On entend ici par multiplexage l'insertion du flux de contenu multimédia dans le flux comprenant l'écran virtuel, dans la zone prévue à cet effet, c'est-à-dire la zone sans affichage prévue pour le visionnage du contenu multimédia, l'insertion pouvant être associée à des modifications du contenu multimédia, comme décrit plus en détails ci-dessous.

Ainsi, le serveur en charge du calcul de l'écran virtuel, encore appelé centre de calcul, et hébergeant la machine virtuelle, n'a pas à reconstruire le contenu multimédia, permettant ainsi une bonne qualité de rendu pour l'utilisateur, les performances d'un tel serveur pour le rendu de contenu multimédia étant limitées du fait de la grande fréquence d'images dans un tel contenu. L'invention permet également au protocole de déport d'affichage permettant l'affichage de l'écran virtuel sur le terminal utilisateur de ne pas avoir à déporter un écran virtuel incluant une vidéo, améliorant ainsi le rendu de l'écran.

Pour ce faire, l'invention, selon ce mode de réalisation, met en oeuvre différents modules permettant au final la fourniture, à l'utilisateur, d'un flux vidéo/contenu multimédia de qualité optimale dans un écran virtuel, en toute transparence pour l'utilisateur.

Selon une caractéristique particulière de l'invention, le procédé comprend une étape préalable de détection d'une requête d'accès au au moins un contenu multimédia par le terminal utilisateur.

Ainsi, l'invention est mise en oeuvre sur détection d'une demande de lecture d'un contenu multimédia par un utilisateur, via sa machine virtuelle. La détection d'une telle requête permet d'optimiser le rendu du contenu multimédia de l'utilisateur, sans que celui-ci n'ait d'action particulière à mettre en oeuvre, donc de manière transparente pour lui.

Selon un mode de réalisation particulier de l'invention, le procédé comprend une étape préalable d'identification d'au moins un serveur apte à fournir le contenu multimédia selon au moins un des critères appartenant au groupe comprenant :
- une proximité géographique du serveur avec le terminal utilisateur ;
- une information représentative de la charge du serveur.

Ainsi, l'invention permet d'optimiser la fourniture d'un, ou plusieurs, contenu(s) multimédia (par exemple une vidéo) requis par un utilisateur, via un écran virtuel déporté, d'une part en tronquant l'écran virtuel de façon à ne pas y inclure le/les contenu(s) multimédia et d'autre part en utilisant un serveur choisi, par exemple, en fonction de sa proximité géographique vis-à-vis du terminal de l'utilisateur, ou bien en fonction d'une charge du serveur adaptée pour fournir le/les contenu(s) multimédia.

En particulier, l'utilisation d'un serveur géographiquement proche du terminal de l'utilisateur pour fournir le contenu multimédia, limite les encombrements du réseau et le temps de transit du contenu multimédia. L'utilisation d'un serveur présentant une charge adaptée à la fourniture du contenu permet de répartir la charge des différents serveurs d'un réseau et ainsi d'optimiser l'utilisation de ces serveurs.

La présente invention permet donc de réduire significativement la charge du réseau de communication et/ou d'un serveur suite à une demande de visionnage d'un contenu tel qu'une vidéo par plusieurs utilisateurs et d'optimiser le rendu d'affichage sur les terminaux des utilisateurs.

Selon un aspect particulier de l'invention, les étapes de génération et/ou de multiplexage sont mises en oeuvre au moins une fois pendant le visionnage du contenu multimédia par le utilisateur, sur détection d'une requête de modification de l'accès au contenu multimédia et/ou d'une requête de modification de l'écran virtuel optimisé par l'utilisateur.

Ainsi, toute modification de la part de l'utilisateur concernant le visionnage du contenu multimédia, ou son utilisation de l'écran virtuel, est prise en compte selon l'invention, de façon à toujours fournir à l'utilisateur un écran virtuel optimisé.

Par exemple, une modification provoquée par une action de l'utilisateur peut consister à stopper la vidéo, à requérir un retour ou une avance rapide. Dans ce cas, seule l'étape de multiplexage est remise en oeuvre, afin de tenir compte de la requête de changement dans le visionnage de la vidéo, l'écran virtuel modifié présentant la zone sans affichage restant en revanche inchangé. Un autre type de modification peut consister à déplacer la fenêtre de visionnage, à la réduire, ou à la mettre en second plan sur le bureau virtuel par exemple, ou même à fermer l'application de visionnage de la vidéo. Dans ce cas, les deux étapes de génération et de multiplexage sont à nouveau mises en oeuvre, l'écran virtuel devant être modifié.

Ce mode de réalisation de l'invention permet de ne pas modifier le fonctionnement du visionnage d'une vidéo pour l'utilisateur via son écran virtuel, en assurant le rendu de toutes les interactions de l'utilisateur avec la vidéo et/ou l'écran virtuel pendant la lecture de la vidéo.

En particulier, l'étape de génération de l'écran virtuel modifié comprend les sous-étapes suivantes :
- détermination de la position et de la dimension de la zone de visionnage du contenu multimédia dans l'écran virtuel ;
- construction de l'écran virtuel modifié correspondant à l'écran virtuel tronqué d'une zone, dite zone sans affichage, correspondant aux position et dimension déterminées lors de l'étape de détermination.

Ainsi, le procédé selon ce mode de réalisation de l'invention détermine d'abord la position, ainsi que la dimension, sur l'écran virtuel, de la fenêtre de visionnage du contenu multimédia, de façon à tronquer cette zone de l'écran virtuel pour délivrer un écran virtuel modifié qui présente donc une zone sans affichage. Cette zone sans affichage sera remplacée, lors du multiplexage avec le contenu multimédia, par le contenu multimédia lui-même, correctement positionné et redimensionné si nécessaire.

Ce mode de réalisation de l'invention permet à l'émulateur de carte graphique qui (re)code pixel par pixel une image destinée à être transmise au terminal de l'utilisateur, de ne générer qu'une partie de l'écran virtuel, nécessitant ainsi moins de ressources de calcul.

Selon une caractéristique particulière de l'invention, l'étape de génération de l'écran virtuel modifié comprend une étape de détermination d'un éventuel recouvrement de la zone de visionnage du contenu multimédia par un élément dans l'écran virtuel.

Ainsi, le procédé selon ce mode de réalisation de l'invention détermine également si la fenêtre de visionnage du contenu multimédia, dans l'écran virtuel, est recouverte par un autre élément affiché sur cet écran (une autre fenêtre par exemple), de façon à correctement afficher le contenu multimédia après le multiplexage.

En particulier, l'étape de multiplexage comprend une sous-étape de réception du contenu multimédia en provenance du serveur, et de l'écran virtuel modifié en provenance du serveur distant hébergeant la machine virtuelle.

Selon un aspect particulier de l'invention, l'étape de multiplexage comprend sous-une étape d'adaptation du contenu multimédia en fonction de paramètres appartenant au groupe comprenant :
- une taille de la zone de visionnage du contenu multimédia ;
- une caractéristique du terminal utilisateur ;
- un ajout de contenu complémentaire ;
- un format de visualisation du contenu multimédia ;
- une modification d'au moins une composante du contenu multimédia.

Ainsi, le procédé selon ce mode de réalisation de l'invention prévoit par exemple de redimensionner le contenu multimédia de façon à l'adapter à la taille de la fenêtre de visionnage, ou bien de ré-encoder le contenu multimédia pour l'adapter aux capacités du terminal utilisateur.

De cette manière, le rendu pour l'utilisateur est encore optimisé.

Ce mode de réalisation particulier de l'invention prévoit également un ensemble de fonctionnalités qui permettent d'enrichir le service en modifiant le contenu multimédia d'origine, comme par exemple permettre un affichage en 3D d'un contenu multimédia originalement en 2D, un ajout d'un contenu complémentaire, comme par exemple une publicité, une modification d'une composante du contenu multimédia, comme par exemple une modification de l'image ou du son, par exemple pour donner un effet particulier de type « rétro », « son spatial » ...

Selon un mode de réalisation particulier du procédé de fourniture d'un premier contenu multimédia, tel que décrit précédemment, l'écran virtuel modifié présente deux zones sans affichage, correspondant respectivement à une première zone de visionnage du premier contenu multimédia et une deuxième zone de visionnage d'un deuxième contenu multimédia et l'étape de multiplexage met en oeuvre le multiplexage de l'écran virtuel modifié et des premier et deuxième contenus multimédia et délivre un écran virtuel optimisé affichant les premier et deuxième contenus multimédia respectivement dans les première et deuxième zones de visionnage.

Ainsi, le procédé selon ce mode de réalisation de l'invention permet d'optimiser le rendu de plusieurs contenus multimédia sur le terminal utilisateur, en multiplexant ces différents contenus multimédia à un écran virtuel modifié dans lequel plusieurs zones sans affichage sont prévues, pour le visionnage des contenus. L'invention selon ce mode de réalisation n'engendre donc aucune restriction, à la différence des techniques de l'art antérieur, en termes de nombre de contenus pouvant être visualisés simultanément par l'utilisateur via son écran virtuel.

Selon un autre mode de réalisation, l'invention concerne un système de fourniture d'au moins un contenu multimédia à au moins un terminal de communication d'un utilisateur, dit terminal utilisateur, sur lequel s'affiche un écran virtuel (EV) fourni par un serveur distant hébergeant une machine virtuelle. Un tel système comprend :
- un module de génération comprenant des moyens de génération d'un écran virtuel modifié (EV*mod*) présentant une zone non calculée, dite zone sans affichage, correspondant à une zone de visionnage du contenu multimédia sur le terminal utilisateur ;
- un module de multiplexage comprenant des moyens de multiplexage de l'écran virtuel modifié (EV*mod*) et du contenu multimédia délivrant un écran virtuel optimisé (EV*opt*) affichant le contenu multimédia dans la zone de visionnage ;
- un module de fourniture comprenant des moyens de fourniture de l'écran virtuel optimisé (EV*opt*) au terminal utilisateur.

Selon un autre mode de réalisation, l'invention concerne également une machine virtuelle, comprenant :
- des moyens de détection d'une requête d'accès à au moins un contenu multimédia par un terminal utilisateur ;
- des moyens de détermination de la position et de la dimension d'une zone de visionnage du contenu multimédia dans un écran virtuel.

Selon un autre mode de réalisation, l'invention concerne un serveur hébergeant au moins une machine virtuelle telle que décrite précédemment, un tel serveur comprenant des moyens de génération d'un écran virtuel modifié présentant une zone non calculée, dite zone sans affichage, correspondant à une zone de visionnage d'un contenu multimédia sur un terminal utilisateur.

Selon encore un autre mode de réalisation, l'invention concerne un serveur de contenus multimédia comprenant :
- des moyens de multiplexage d'un écran virtuel modifié selon le procédé décrit précédemment et présentant une zone non calculée, dite zone sans affichage, correspondant à une zone de visionnage d'un contenu multimédia sur un terminal utilisateur, et du contenu multimédia, délivrant un écran virtuel optimisé affichant le contenu multimédia dans la zone de visionnage ;
- des moyens de fourniture de l'écran virtuel optimisé au terminal utilisateur.

L'invention concerne également un terminal de communication comprenant des moyens de multiplexage d'un écran virtuel modifié selon le procédé décrit précédemment et présentant une zone non calculée, dite zone sans affichage, correspondant à une zone de visionnage d'un contenu multimédia sur le terminal, et du contenu multimédia, délivrant un écran virtuel optimisé affichant le contenu multimédia dans la zone de visionnage.

L'invention concerne enfin un programme d'ordinateur comportant des instructions pour la mise en oeuvre d'un procédé tel que décrit précédemment, lorsque ce programme est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, déjà commentée en relation avec l'art antérieur, illustre un exemple de système mettant en oeuvre une machine virtuelle hébergée par un centre de calcul, un déport d'affichage vers un utilisateur et un système de distribution de contenus, selon l'art antérieur ;
- la figure 2 présente les principales étapes du procédé de fourniture d'au moins un contenu multimédia selon un mode de réalisation de l'invention ;
- la figure 3 illustre un exemple de diagramme de séquence pour la mise en oeuvre du procédé de fourniture d'au moins un contenu multimédia selon un mode de réalisation particulier de l'invention ;
- les figures 4 et 5 illustrent deux exemples de réalisation du procédé de fourniture d'un contenu multimédia, selon un mode de réalisation particulier de l'invention ;
- la figure 6 illustre un exemple de mise en oeuvre du procédé de fourniture d'au moins un contenu multimédia, selon un mode de réalisation particulier de l'invention.

### 5. Description d'un mode de réalisation de l'invention

### 5.1 Principe général

Le principe général de l'invention repose sur l'optimisation de la fourniture d'un contenu multimédia à un utilisateur, via un écran virtuel.

Cette optimisation est basée sur la construction, au niveau d'une machine virtuelle, d'un écran virtuel dit « modifié » comprenant une zone sans affichage destinée au visionnage d'un contenu multimédia provenant d'une source distincte du serveur hébergeant la machine virtuelle, et sur le multiplexage du contenu multimédia (qui n'est donc plus calculé au niveau de la machine virtuelle) avec l'écran virtuel modifié.

Ainsi, la charge de calcul au niveau du serveur hébergeant la machine virtuelle est minimisée, le calcul se limitant au bureau, sans le calcul de la fenêtre de visionnage du contenu multimédia, permettant à l'utilisateur de visionner dans des conditions optimales un contenu multimédia via un écran virtuel.

De plus, selon un mode de réalisation particulier de l'invention, le contenu multimédia provient d'un serveur choisi selon des critères tels que la proximité géographique avec l'utilisateur ou la répartition des charges au sein d'un réseau, permettant également d'optimiser la charge des serveurs de contenus dans un réseau et le temps de transit des contenus multimédia vers les utilisateurs.

Ainsi, l'invention, selon ses différents modes de réalisation, permet de fournir à un utilisateur, avec une qualité optimale, un écran virtuel pour le visionnage d'un contenu multimédia, grâce à une optimisation de la charge de calcul au niveau de la machine virtuelle et une optimisation de la fourniture du contenu multimédia par un serveur en mettant en oeuvre de manière performante un système de distribution de contenus.

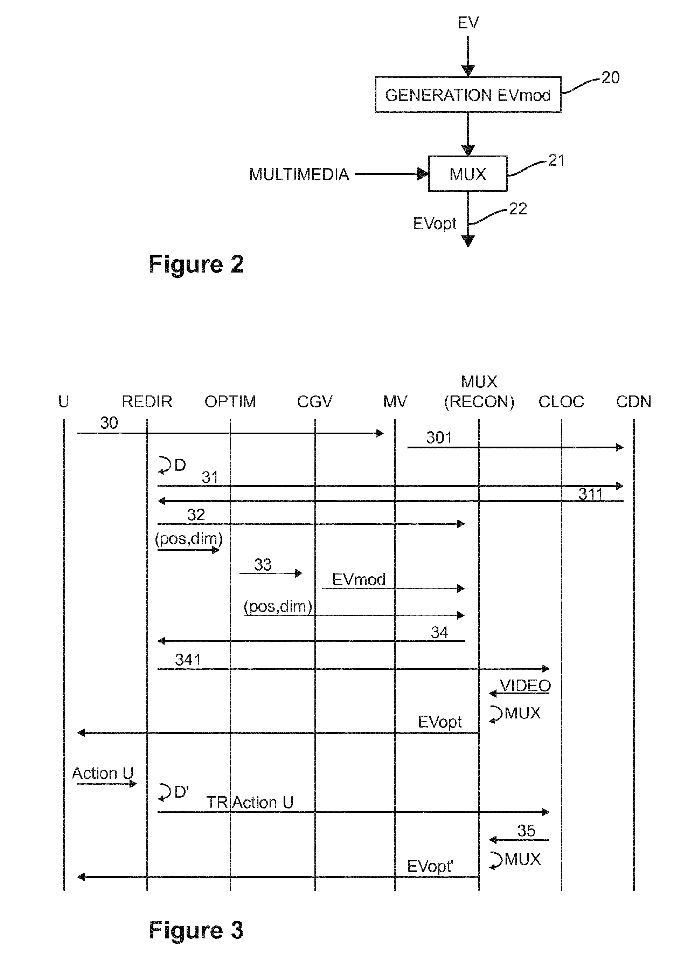

Pour ce faire, et comme illustré en figure 2, une première étape 20 de génération d'un écran virtuel modifié EV*mod* est mise en oeuvre, délivrant un écran virtuel tronqué, c'est-à-dire présentant une zone sans affichage destinée au visionnage d'un contenu multimédia.

Cette première étape est par exemple mise en oeuvre par une machine virtuelle, au sein d'un centre de calcul distant du terminal de communication de l'utilisateur souhaitant visualiser le contenu multimédia.

Une deuxième étape 21 de multiplexage est ensuite mise en oeuvre, permettant de multiplexer l'écran virtuel modifié EV*mod* et le contenu multimédia, par exemple fourni par un serveur de contenus. Ce multiplexage délivre un écran virtuel optimisé EV*opt* fourni ensuite, lors d'une étape 22, à l'utilisateur.

Ce serveur de contenus est par exemple un serveur distant du terminal de communication de l'utilisateur et distinct du centre de calcul hébergeant la machine virtuelle.

Différents modes de réalisation sont présentés ci-après, dans lesquels les modules mettant en oeuvre les étapes ci-dessus sont également décrits plus en détails.

### 5.2 Description d'un mode de réalisation particulier de l'invention

On présente maintenant, en relation avec les figures 3, 4 et 5, un mode de réalisation particulier de l'invention.

La figure 3 présente un exemple de diagramme de séquences représentant la mise en oeuvre du procédé de fourniture d'un contenu multimédia à un utilisateur U, selon un mode de réalisation particulier de l'invention.

Dans ce mode de réalisation particulier, on considère que l'utilisateur U, connecté à une machine virtuelle MV d'un centre de calcul DTC (hébergeant également une carte graphique virtuel CGV et un hyperviseur HYP), souhaite regarder un contenu multimédia disponible sur au moins un serveur distant sur Internet.

Ainsi, l'utilisateur U requiert, via une application APP2 sur son écran virtuel EV, la lecture d'un contenu multimédia, noté VIDEO. Selon une caractéristique particulière de l'invention, le contenu VIDEO est fourni par un serveur C-LOC géographiquement proche de l'utilisateur U et apte à fournir ce contenu VIDEO (par exemple, car ce contenu a déjà été visionné précédemment par un utilisateur co-localisé). Ce serveur est par exemple choisi en mettant en oeuvre un système de distribution de contenus CDN, bien connu et donc non détaillé ici.

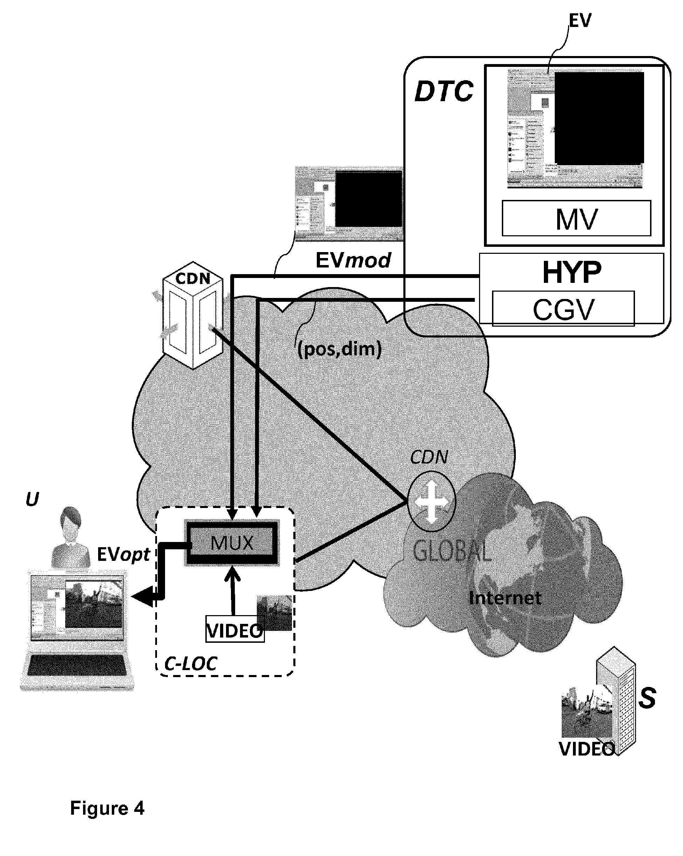

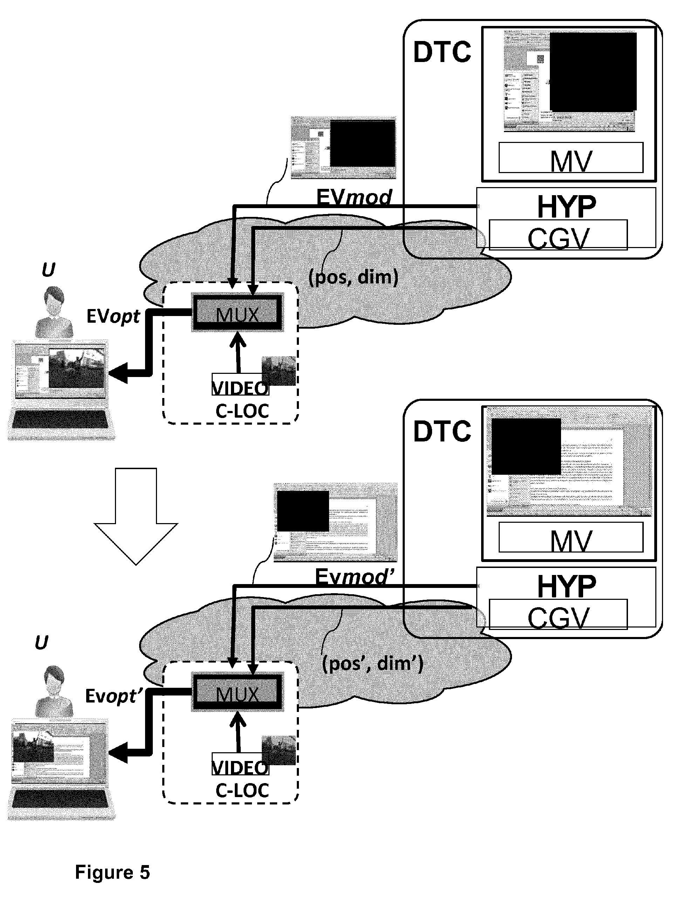

Ce système est également illustré en figures 4 et 5, décrites plus en détails ci-après.

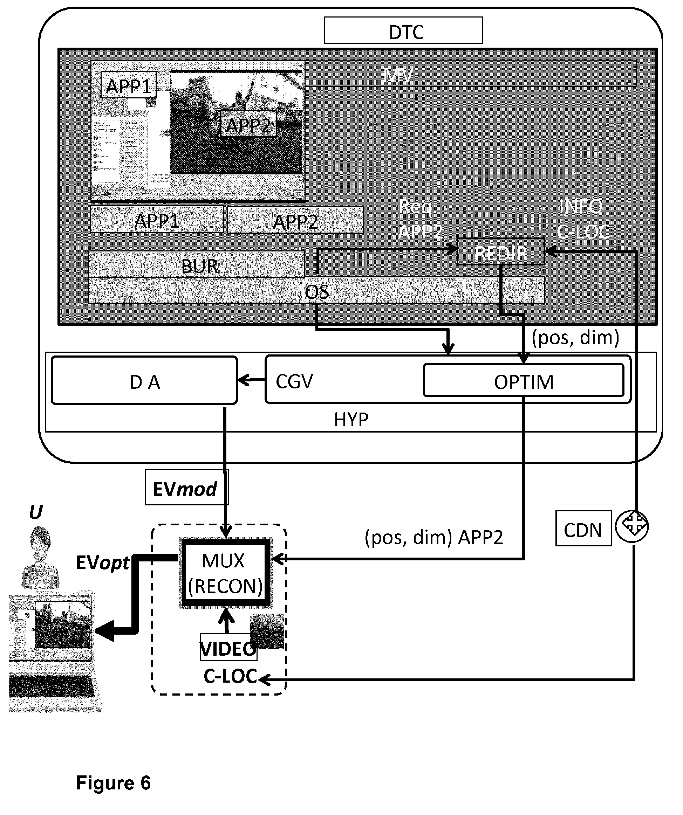

Selon ce mode de réalisation, l'invention est mise en oeuvre via une pluralité de modules mettant en oeuvre différentes fonctionnalités et pouvant être implémentés au sein d'un système comprenant un ou plusieurs équipements, comme illustré en figure 6 décrite en section 5.3.

Par exemple, un module REDIR est en charge de la détection et de la supervision des actions/mouvements au sein des applications de lecture de contenus, et peut par exemple être intégré dans le système d'exploitation OS de la machine virtuelle MV.

Ce module REDIR communique avec un module OPTIM en charge de l'optimisation de l'affichage des contenus multimédia, par exemple intégré dans l'hyperviseur HYP du centre de calcul hébergeant la machine virtuelle MV.

Le module REDIR communique également avec le système CDN de distribution de contenus, et plus particulièrement avec le serveur de contenu local C-LOC, encore appelé noeud de cache local, choisi pour fournir le contenu multimédia requis par l'utilisateur U.

Enfin, le module MUX, également noté RECON, est en charge du multiplexage de l'écran virtuel tronqué fourni par la machine virtuelle MV et du contenu multimédia fourni par un programme de rendu de contenu multimédia au sein du serveur C-LOC.

Dans un premier temps, une requête 30 de lecture du contenu VIDEO via l'application APP2 est transmise par le terminal de communication de l'utilisateur U à la machine virtuelle MV, qui la transfère, sous la forme d'une requête 301, au système de distribution de contenus CDN.

Le module REDIR détecte (D) la demande de lecture du contenu VIDEO et active les différents mécanismes d'optimisation mis en oeuvre selon ce mode de réalisation de l'invention.

En particulier, REDIR transmet une requête 31 de géolocalisation du serveur le plus proche de l'utilisateur, apte à fournir le contenu VIDEO, au système de distribution de contenu CDN. Celui-ci renvoie (311) les informations de géolocalisation au module REDIR.

Le module REDIR peut donc requérir (32) le démarrage du programme de reconstruction d'image mis en oeuvre par le module MUX (RECON).

Selon une première variante de réalisation, le module MUX est déjà activé et en attente de cette requête 32 pour démarrer la reconstruction d'image. Dans ce cas, le terminal de l'utilisateur est en permanence connecté par défaut au programme de multiplexage mis en oeuvre par le module MUX.

Selon une deuxième variante de réalisation, le module MUX est activé par cette requête 32 elle-même.

Ce module MUX a besoin d'une part de l'écran virtuel modifié EV*mod* présentant une fenêtre sans affichage pour le visionnage du contenu, d'autre part du positionnement (x, y) et de la taille (l, h) de la fenêtre de visionnage sur le bureau virtuel, et enfin du contenu VIDEO lui-même.

Les informations de position et de taille de la fenêtre de visionnage (pos, dim) sont d'abord transmises par le module REDIR au module OPTIM, lequel peut transmettre à la carte graphique virtuelle CGV une demande 33 de suppression de la fenêtre/zone prévue pour le visionnage du contenu. Ainsi, la carte graphique virtuelle CGV peut transmettre, au module MUX, un écran virtuel modifié EV*mod* présentant une zone sans affichage.

Le module OPTIM transmet également au module MUX les informations (pos, dim) de position et dimensions de la zone d'affichage.

Il manque à ce stade au module MUX le contenu multimédia lui-même. Le module MUX transmet donc un message 34, à destination du module REDIR, lui indiquant qu'il est prêt à multiplexer l'écran virtuel modifié avec le contenu VIDEO.

Le module REDIR requiert (341) donc le contenu au serveur local C-LOC préalablement identifié. Celui-ci transmet le contenu VIDEO au module MUX, lequel peut multiplexer ce contenu VIDEO et l'écran virtuel modifié EV*mod*, en tenant compte des informations de position et dimension de la zone de visionnage, délivrant ainsi un écran virtuel optimisé EV*opt* comprenant une fenêtre de visionnage du contenu VIDEO requis par l'utilisateur U.

Par ailleurs, selon une caractéristique particulière de ce mode de réalisation, le module MUX peut adapter le contenu VIDEO en fonction de paramètres tels que par exemple une caractéristique du terminal utilisateur, l'ajout d'un contenu complémentaire, etc.

Le module MUX transmet ensuite l'écran virtuel optimisé EV*opt* au terminal de l'utilisateur U.

Ce mode de réalisation est également illustré en figure 4, qui représente également les différents équipements mis en oeuvre dans le système de fourniture selon ce mode de réalisation particulier de l'invention.

Ainsi, selon ce mode de réalisation particulier, le centre de calcul distant DTC hébergeant la machine virtuelle MV, la carte graphique virtuelle CGV et l'hyperviseur HYP fournit l'écran virtuel modifié EV*mod*, ainsi que les informations de position et dimension (pos, dim) de la fenêtre de visionnage du contenu VIDEO au module MUX. Selon ce mode de réalisation particulier, le module MUX est intégré au serveur local C-LOC fournissant le contenu VIDEO.

Ce module MUX, à partir du contenu VIDEO fourni par le programme de rendu de vidéo du serveur C-LOC, de l'écran virtuel modifié EV*mod*, ainsi que des informations de position et dimension de la fenêtre de visionnage du contenu VIDEO, peut fournir, après multiplexage, un écran virtuel optimisé EV*opt* au terminal de l'utilisateur *U*.

Le serveur S de contenus multimédia est utilisé par le système de distribution de contenus CDN pour localiser le serveur C-LOC géographiquement proche du terminal utilisateur et apte à fournir le contenu VIDEO requis.

Sur cette figure 4, on peut observer que l'écran virtuel modifié EV*mod* comprend un bureau virtuel, sur lequel une fenêtre noire est présente en haut à droite pour le visionnage du contenu VIDEO par l'utilisateur *U*. On voit également que le serveur local C-LOC dispose du contenu VIDEO et le fournit au module MUX, lequel le multiplexe avec l'écran virtuel modifié EV*mod* afin de délivrer à l'utilisateur *U* un écran virtuel optimisé EV*opt*, sur lequel le contenu VIDEO est joué dans la fenêtre d'affichage prévue à cet effet (en haut à droite).

Ainsi, l'utilisateur peut lire un contenu multimédia, par exemple une vidéo, via son écran virtuel, dans des conditions de visualisation rendues optimales par la mise en oeuvre de l'invention, selon ce mode de réalisation particulier. En effet, les capacités de calcul du centre de calcul, et en particulier de la machine virtuelle MV et de la carte graphique virtuelle CGV, sont optimisées car déchargées du calcul de la vidéo, et la charge du réseau de serveurs de contenus est également optimisée, en choisissant le serveur local C-LOC pour fournir la vidéo.

On comprend bien cependant que la visualisation d'un contenu multimédia par un utilisateur peut être amenée à évoluer, l'utilisateur pouvant effectuer des actions sur son bureau virtuel et/ou sur la lecture de la vidéo elle-même, via l'application APP2. Par exemple, l'utilisateur peut déplacer la fenêtre de visionnage de la vidéo, ou en modifier la taille. L'utilisateur peut également fermer la fenêtre de lecture de vidéo. De plus, l'utilisateur peut mettre en pause la lecture de la vidéo, demander une avance ou un retour rapide, etc.

Ces différentes actions doivent être prises en compte en temps réel de façon à fournir à l'utilisateur un rendu optimal tout au long de la visualisation de la vidéo.

Le diagramme de séquence de la figure 3 présente également la prise en compte d'une telle action de l'utilisateur.

Ainsi, lorsque l'utilisateur effectue une commande (Action U) sur la vidéo (telle qu'une pause, une avance rapide, ...), celle-ci est interceptée (D') par le module REDIR, lequel la transfère (TR Action U) au serveur local C-LOC. Ce dernier transmet une commande d'action 35 sur la vidéo au module MUX. Celui-ci effectue un nouveau multiplexage MUX avec le contenu VIDEO et l'écran virtuel modifié EV*mod*, afin de délivrer à l'utilisateur un écran virtuel optimisé EV*opt'* tenant compte de l'action de l'utilisateur sur la vidéo.

Si l'action de l'utilisateur s'applique à l'écran virtuel et non à la lecture proprement dite du contenu VIDEO, alors la commande est transmise par le module REDIR au module OPTIM, lequel fournir un nouvel écran virtuel modifié EV*mod'* qui sera multiplexé avec le contenu VIDEO par le module MUX.

Cette situation n'est pas représentée sur la figure 3, mais est illustrée par la figure 5 décrite ci-dessous.

La situation représentée en haut de la figure 5 correspond à la figure 4, dans laquelle l'utilisateur U visionne une vidéo sur son écran virtuel, dans une fenêtre placée en haut à droite de son écran.

Suite à une action de l'utilisateur déplaçant cette fenêtre, pour visionner le même contenu à un autre endroit de son écran virtuel (en haut à gauche), des informations de position et de dimension mises à jour (pos', dim') de la fenêtre de visionnage sont traitées par le centre de calcul de façon à fournir un écran virtuel modifié mis à jour, noté EV*mod',* sur lequel la zone sans affichage se trouve maintenant en haut à gauche.

Ces informations de position et de dimension mises à jour (pos', dim') sont également fournies au module MUX, qui peut donc multiplexer cet écran virtuel modifié mis à jour EV*mod',* avec le contenu VIDEO pour fournir à l'utilisateur un virtuel optimisé EV*opt'* tenant compte de l'action de l'utilisateur sur la fenêtre de visionnage de la vidéo.

L'invention, selon ses différents modes de réalisation particuliers, permet donc de fournir en permanence un rendu optimal à l'utilisateur, pour le contenu multimédia requis, prenant en compte, en temps réel, toutes les actions de l'utilisateur sur son bureau virtuel et/ou sur le contenu multimédia lui-même.

De même, lorsque l'utilisateur termine la lecture du contenu, le module REDIR intercepte la fermeture de la fenêtre et transmet les ordres de fin de traitement à l'hyperviseur HYP, au module MUX et au système de diffusion de contenus CDN pour arrêter leur fonctionnement.

De plus, il est bien entendu que, selon d'autres modes de réalisation particuliers de l'invention, le procédé peut fournir à l'utilisateur une pluralité de contenus multimédia, avec un rendu optimal. En effet, un utilisateur peut visualiser en même, dans plusieurs fenêtres distinctes, plusieurs contenus multimédia.

Ainsi, le module MUX peut multiplexer une pluralité de contenus multimédia avec un écran virtuel modifié présentant une pluralité de zones sans affichage destinées à la visualisation des différents contenus requis par l'utilisateur.

### 5.3 Description d'une mise en oeuvre particulière de l'invention

La figure 6 illustre un exemple de mise en oeuvre particulier de l'invention, dans lequel les différents modules déjà décrits précédemment sont intégrés respectivement dans le centre de calcul DTC hébergeant la machine virtuelle MV et le serveur local C-LOC.

Par exemple, une machine virtuelle MV est créée par l'opérateur avec un système d'exploitation OS contenant le module REDIR.

Cette machine virtuelle MV est hébergée dans un centre de calcul DTC disposant de l'hyperviseur HYP, complété du module OPTIM pour interagir avec le module REDIR et le système de distribution de contenus CDN.

A proximité géographique d'un utilisateur U se trouve un noeud de cache, ou serveur, local C-LOC comprenant le module MUX (RECON) de multiplexage de flux de déport d'écran des machines virtuelles. Ce noeud de cache C-LOC contient aussi pour l'exemple le fichier de contenu VIDEO à visionner par l'utilisateur (on suppose que ce contenu a déjà été visionné précédemment par un autre utilisateur qui a donné lieu à son stockage sur le noeud de cache).

Dans une variante de cette mise en oeuvre de l'invention, le module MUX de multiplexage de flux de déport d'écran des machines virtuelles peut s'exécuter sur le poste de l'utilisateur ou ailleurs dans le réseau de l'opérateur.

L'écran d'une machine virtuelle « standard » peut être décomposé de la manière suivante :
- les parties relativement statiques telles que le bureau du système d'exploitation, les applications de bureautique sous forme de fenêtres, la barre de fenêtres du bureau (en bas de l'écran généralement), ...,
- les parties plus dynamiques telles que le navigateur Internet avec des animations (de type Flash par exemple), les lecteurs de contenus vidéos (y compris dans le navigateur Internet), les jeux, ....

Dans l'exemple illustré en figure 6, le flux « faiblement dynamique » est composé de BUR et APP1, le flux dynamique correspondant à APP2. De plus, chaque fenêtre APPx est identifiée par un couple (pos, dim) caractérisant sa position (x,y) et ses dimensions (largeur I, hauteur h).

Le module REDIR est intégré dans le système d'exploitation OS de la machine virtuelle MV car il peut ainsi intercepter le démarrage d'un programme de visionnage de contenus APP2.

De plus, le module REDIR peut ainsi suivre l'évolution de la fenêtre APP2 sur l'écran de la machine virtuelle (déplacement, fermeture, « iconification », ...).

Le module REDIR communique avec le module OPTIM dans l'hyperviseur HYP pour lui indiquer la position de la ou des fenêtres de visionnage de contenus, afin de pouvoir les supprimer de l'écran virtuel.

Le module REDIR communique également avec le système de distribution de contenus CDN pour lancer/arrêter la lecture du contenu par le noeud de cache C-LOC lors du démarrage ou de la fermeture de l'application APP2.

Cette mise en oeuvre de l'invention utilise l'émulation de carte graphique, notée carte graphique virtuelle CGV, fournie par l'hyperviseur HYP. En effet, l'hyperviseur qui simule un environnement d'exécution à un système d'exploitation OS contient un émulateur de carte graphique qui recode pixel par pixel l'image que va recevoir le terminal utilisateur. Cette image est ensuite véhiculée par un protocole de déport d'écran DA pour être distribuée à distance.

L'invention, selon cette mise en oeuvre, tire profit de ce fonctionnement pour retrancher du calcul de construction de l'image totale de l'écran la partie qui concerne l'affichage d'un contenu multimédia lors de son visionnage.

Par exemple, sur un écran de 1440 pixels par 900 pixels, si la fenêtre de visionnage de la vidéo est située à droite de l'écran et mesure 640 pixels par 480 pixels, le module OPTIM indique à l'hyperviseur HYP de ne générer qu'une partie de l'écran, correspondant à APP1.

L'hyperviseur HYP est alors déchargé de l'opération de rendu de la vidéo, laquelle est fortement consommatrice en puissance de calcul, car la vidéo est généralement rafraichie à 25 images par seconde.

De plus, les programmes informatiques de lecture de contenus utilisent généralement des fonctions d'accélération graphique fournies par les cartes graphiques (OpenGL par exemple), ce qui permet de faciliter le repérage et l'interception des fenêtres de lecture de contenus : la zone mémoire allouée pour lire le contenu peut être facilement redirigée et libérée car elle est explicitement reconnue dans l'émulateur de carte graphique.

Par ailleurs, l'invention, selon cette mise en oeuvre, utilise le système de fenêtrage de l'OS. En effet, dans tout système d'exploitation graphique (Windows, Linux, Mac O/S), chaque application est représentée par une fenêtre visible sur le bureau de l'OS et disposant d'une position et d'une dimension. L'utilisateur peut alors, via un dispositif de pointage, bouger ou redimensionner la fenêtre à sa guise, sous le contrôle du système d'exploitation. Ces informations sont donc utilisées d'une part pour identifier les programmes informatiques susceptibles de lire un contenu, c'est-à-dire ici par exemple l'application APP2, et d'autre part pour localiser la fenêtre de visionnage du contenu affichée à l'écran sur le bureau virtuel du terminal de l'utilisateur.

Ainsi, lors du lancement d'un programme de lecture de contenu, ici (Req.APP2) par exemple, le module REDIR intercepte la ou les fenêtres de lecture de contenus et peut communiquer les informations de position en temps réel au module OPTIM en particulier.

Enfin, cette mise en oeuvre de l'invention utilise également, comme déjà décrit ci-dessus, un système de distribution de contenus CDN.

Ainsi, lors d'un accès à un contenu distant par une application de la machine virtuelle MV, le mécanisme de redirection inhérent au système CDN intercepte la requête pour la rediriger vers le noeud de cache le plus approprié, ici C-LOC. En effet, l'information de géolocalisation de l'utilisateur envoyée au système de distribution de contenus CDN pour identifier le noeud de cache local est fournie par le système de déport d'affichage DA déjà en cours de fonctionnement, qui connait donc les paramètres permettant de géolocaliser l'utilisateur. Les informations « INFO C-LOC » d'identification du noeud de cache local C-LOC sont donc transmises au module REDIR, lequel est alors activé.

On dispose donc à ce stade d'un écran virtuel modifié EV*mod,* présentant au moins une zone sans affichage prévue pour le visionnage du contenu VIDEO, des informations de position et de dimension (pos, dim) de cette zone de visionnage, ainsi que des informations sur le serveur C-LOC apte à fournir le contenu VIDEO.

Le contenu VIDEO étant stocké dans le noeud de cache C-LOC, le module MUX (RECON) multiplexe le flux d'écran virtuel modifié EV*mod* délivré par la machine virtuelle, via le programme de déport d'affichage DA, et un flux issu du rendu de la vidéo VIDEO depuis C-LOC, pour délivrer le bureau complet EV*opt*.

Les informations de positionnement/dimension de la fenêtre d'affichage du contenu VIDEO sur l'écran sont transmises en temps réel par le module OPTIM au module MUX. Dans une variante de cette mise en oeuvre de l'invention, le module REDIR peut transmettre directement ces informations au module MUX.

Dans une autre variante de l'invention, le module MUX peut mettre en oeuvre des adaptations du contenu VIDEO, par exemple en utilisant des formats d'encodage adaptés à la taille de la fenêtre APP2, pour optimiser le rendu pour l'utilisateur et limiter la charge de calcul nécessaire. Ces adaptations peuvent également être mises en oeuvre par le programme de rendu de la vidéo dans le noeud de cache C-LOC.

En d'autres termes, les modules REDIR, OPTIM et MUX (RECON) forment un système de fourniture d'un contenu multimédia selon différents modes de réalisation de l'invention, comprenant des moyens de génération d'un écran virtuel modifié présentant une zone sans affichage, correspondant à une zone de visionnage d'un contenu, des moyens de multiplexage de l'écran virtuel modifié et du contenu multimédia délivrant un écran virtuel optimisé affichant le contenu multimédia dans la zone de visionnage et des moyens de fourniture de l'écran virtuel optimisé au terminal utilisateur.

Ce système de fourniture permet d'améliorer la qualité perçue par un utilisateur pour le visionnage d'un contenu multimédia.

Ainsi, le fait de décharger l'hyperviseur du calcul du rendu graphique d'une vidéo, à la cadence de plusieurs images par seconde, permet de lever un facteur limitant pour le visionnage de contenus dans une machine virtuelle distante. En effet, la cadence imposée pour le rendu du bureau et du contenu peut s'avérer bloquant pour la machine virtuelle ("gel" de la vidéo lors de la lecture, dégradation des performances de la machine, voire arrêt pur et simple de la lecture du contenu) mais aussi pour le protocole de déport d'affichage (impossibilité de suivre la cadence, encodage protocolaire non adapté aux contenus vidéos).

De ce point de vue, l'invention, selon ces différents modes de réalisation particuliers, améliore le rendu et rend le visionnage accessible à l'utilisateur.

Selon un autre aspect de l'invention, le rapprochement du contenu considéré, du terminal de l'utilisateur, grâce à l'utilisation d'un serveur géographiquement proche du terminal permet, d'un point de vue réseau, de réduire le temps de transfert des informations entre le terminal utilisateur et le serveur. De ce fait, la latence du système observée selon les techniques de l'art antérieur est réduite et la qualité de communication s'en trouve améliorée.

Enfin, l'invention, selon les différents modes de réalisation exposés, permet également d'optimiser les ressources réseau de l'opérateur, en réduisant la bande passante réseau nécessaire pour garantir le débit de la vidéo à visionner, cette réduction de bande passante, multipliée par le nombre de terminaux d'utilisateurs, s'avérant conséquente.

## Revendications

1. Procédé de fourniture d'au moins un contenu multimédia à au moins un terminal de communication d'un utilisateur, dit terminal utilisateur, sur lequel s'affiche un écran virtuel (EV) fourni par un serveur distant hébergeant une machine virtuelle,
**caractérisé en ce qu'il** comprend les étapes suivantes :
• génération (20) d'un écran virtuel modifié (EV*mod*) présentant une zone non calculée, dite zone sans affichage, correspondant à une zone de visionnage dudit contenu multimédia sur ledit terminal utilisateur ;
• multiplexage (21) dudit écran virtuel modifié (EV*mod*) et dudit contenu multimédia délivrant un écran virtuel optimisé (EV*opt*) affichant ledit contenu multimédia dans ladite zone de visionnage ;
• fourniture (22) dudit écran virtuel optimisé (EV*opt*) audit terminal utilisateur.

2. Procédé de fourniture d'au moins un contenu multimédia selon la revendication 1, **caractérisé en ce qu'il** comprend une étape préalable de détection d'une requête d'accès audit au moins un contenu multimédia par ledit terminal utilisateur.

3. Procédé de fourniture d'au moins un contenu multimédia selon l'une quelconque des revendications 1 à 2, **caractérisé en ce qu'il** comprend une étape préalable d'identification d'au moins un serveur apte à fournir ledit contenu multimédia selon au moins un des critères appartenant au groupe comprenant :
• une proximité géographique dudit serveur avec ledit terminal utilisateur ;
• une information représentative de la charge dudit serveur.

4. Procédé de fourniture d'au moins un contenu multimédia selon l'une quelconque des revendications 1 à 3, **caractérisé en ce que** lesdites étapes de génération et/ou de multiplexage sont mises en oeuvre au moins une fois pendant le visionnage dudit contenu multimédia par ledit utilisateur, sur détection d'une requête de modification dudit accès audit contenu multimédia et/ou d'une requête de modification dudit écran virtuel optimisé par ledit utilisateur.

5. Procédé de fourniture d'au moins un contenu multimédia selon l'une quelconque des revendications 1 à 4, **caractérisé en ce que** ladite étape de génération dudit écran virtuel modifié comprend les sous-étapes suivantes :
• détermination de la position et de la dimension de ladite zone de visionnage dudit contenu multimédia dans ledit écran virtuel ;
• construction dudit écran virtuel modifié correspondant audit écran virtuel tronqué d'une zone, dite zone sans affichage, correspondant auxdites position et dimension déterminées lors de ladite étape de détermination.

6. Procédé de fourniture d'au moins un contenu multimédia selon la revendication 5, **caractérisé en ce que** ladite étape de génération dudit écran virtuel modifié comprend une étape de détermination d'un éventuel recouvrement de ladite zone de visionnage dudit contenu multimédia par un élément dans ledit écran virtuel.

7. Procédé de fourniture d'au moins un contenu multimédia selon l'une quelconque des revendications 1 à 6, **caractérisé en ce que** ladite étape de multiplexage comprend sous-une étape d'adaptation dudit contenu multimédia en fonction de paramètres appartenant au groupe comprenant :
• une taille de ladite zone de visionnage dudit contenu multimédia ;
• une caractéristique dudit terminal utilisateur ;
• un ajout de contenu complémentaire ;
• un format de visualisation dudit contenu multimédia ;
• une modification d'au moins une composante dudit contenu multimédia.

8. Procédé de fourniture d'au moins un contenu multimédia selon l'une quelconque des revendications 1 à 7, dit premier contenu multimédia,
**caractérisé en ce que** ledit écran virtuel modifié présente deux zones sans affichage, correspondant respectivement à une première zone de visionnage dudit premier contenu multimédia et une deuxième zone de visionnage d'un deuxième contenu multimédia et **en ce que** ladite étape de multiplexage met en oeuvre le multiplexage dudit écran virtuel modifié et desdits premier et deuxième contenus multimédia et délivre un écran virtuel optimisé affichant lesdits premier et deuxième contenus multimédia respectivement dans lesdites première et deuxième zones de visionnage.

9. Système de fourniture d'au moins un contenu multimédia à au moins un terminal de communication d'un utilisateur, dit terminal utilisateur, sur lequel s'affiche un écran virtuel (EV) fourni par un serveur distant hébergeant une machine virtuelle,
**caractérisé en ce qu'il** comprend :
• un module de génération comprenant des moyens de génération d'un écran virtuel modifié (EV*mod*) présentant une zone non calculée, dite zone sans affichage, correspondant à une zone de visionnage dudit contenu multimédia sur ledit terminal utilisateur ;
• un module de multiplexage comprenant des moyens de multiplexage dudit écran virtuel modifié (EV*mod*) et dudit contenu multimédia délivrant un écran virtuel optimisé (EV*opt*) affichant ledit contenu multimédia dans ladite zone de visionnage ;
• un module de fourniture comprenant des moyens de fourniture dudit écran virtuel optimisé (EV*opt*) audit terminal utilisateur.

10. Serveur hébergeant au moins une machine virtuelle, **caractérisé en ce qu'il** comprend :
• des moyens, mis en oeuvre dans ladite machine virtuelle, de détection d'une requête d'accès à au moins un contenu multimédia par un terminal utilisateur ;
• des moyens, mis en oeuvre dans ladite machine virtuelle, de détermination de la position et de la dimension d'une zone de visionnage dudit contenu multimédia dans un écran virtuel ;
• des moyens de génération d'un écran virtuel modifié présentant une zone non calculée, dite zone sans affichage, correspondant à une zone de visionnage d'un contenu multimédia sur un terminal utilisateur.

11. Serveur de contenus multimédia **caractérisé en ce qu'il** comprend :
• des moyens de multiplexage d'un écran virtuel modifié selon le procédé de la revendication 1 et présentant une zone non calculée, dite zone sans affichage, correspondant à une zone de visionnage d'un contenu multimédia sur un terminal utilisateur, et dudit contenu multimédia, délivrant un écran virtuel optimisé affichant ledit contenu multimédia dans ladite zone de visionnage ;
• des moyens de fourniture dudit écran virtuel optimisé audit terminal utilisateur.

12. Terminal de communication **caractérisé en ce qu'il** comprend des moyens de multiplexage d'un écran virtuel modifié selon le procédé de la revendication 1 et présentant une zone non calculée, dite zone sans affichage, correspondant à une zone de visionnage d'un contenu multimédia sur ledit terminal, et dudit contenu multimédia, délivrant un écran virtuel optimisé affichant ledit contenu multimédia dans ladite zone de visionnage.

13. Programme d'ordinateur comportant des instructions pour la mise en oeuvre d'un procédé selon l'une quelconque des revendications 1 à 8 lorsque ce programme est exécuté par un processeur.
